# EUROPEAN PATENT SPECIFICATION

(11) **EP 0 732 195 B1**
(45) Date of publication and mention of the grant of the patent: **21.10.1998**
(21) Application number: 96103338.8
(22) Date of filing: 04.03.1996
(51) Int. Cl.: B32B 27/08, B41M 5/40

(54) **Stretched thermoplastic resin film laminate and printing paper using the same**
Gereckter thermoplastischer Mehrschichtharzfilm und diesen benutzendes Druckpapier
Feuille multicouche étiré en résine thermoplastique et papier pour impression l'utilisant

(30) Priority: 16.03.1995 JP 83493/95
(43) Date of publication of application: 18.09.1996
(73) Proprietor: OJI-YUKA SYNTHETIC PAPER CO., LTD., Tokyo (JP)
(72) Inventor: Ohashi, Takashi, Kamisu-cho, Kashima-gun, Ibaraki (JP); Hembo, Motoshi, Kamisu-cho, Kashima-gun, Ibaraki (JP); Nishizawa, Takatoshi, Kamisu-cho, Kashima-gun, Ibaraki (JP)
(74) Representative: Hansen, Bernd, Dr. Dipl.-Chem.

(56) References cited:
- EP-A- 0 434 073
- EP-A- 0 515 969
- EP-A- 0 540 020
- EP-A- 0 568 093

## Description

### FIELD OF THE INVENTION

This invention relates to a stretched thermoplastic resin film laminate having excellent printability which, when offset printed with general-purpose offset inks of oxidative polymerization type (drying oil type), is prevented from developing unevenness or curling due to the vehicle of the offset inks.

### BACKGROUND OF THE INVENTION

Lithography, generally called offset printing, easily achieves multicolor printing and is used for printing on paper, polyethylene terephthalate films, polyamide films, coated paper, etc.

In particular, general-purpose drying type offset inks have the composition shown in Tables 1 and 2 below.

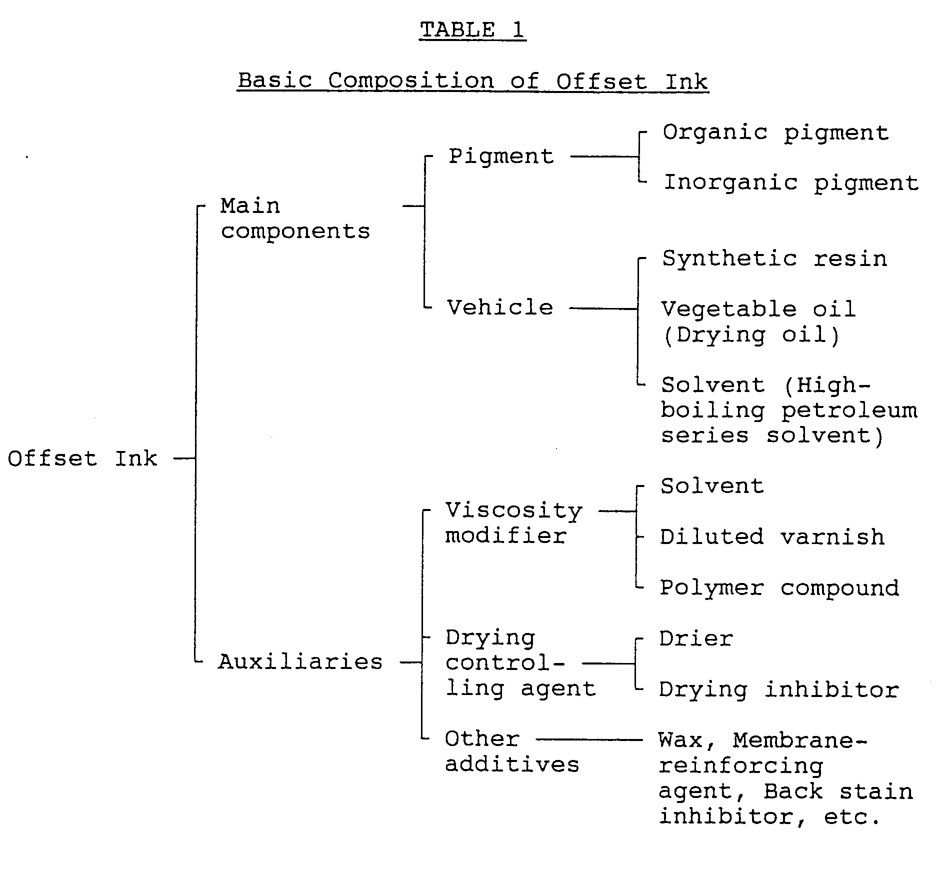

**TABLE 2**

| Composition of Offset Inks (parts by weight) | | | |
|---|---|---|---|
| | For Sheet Fed Press | For Non-Paper | For Web Offset Press |
| Pigment | 25 | 25 | 25 |
| Resin | 25 | 30 | 25 |
| Drying oil | 20 | 34 | 10 |
| High-boiling petroleum series solvent | 25 | 5 | 36 |
| Drier | 1 | 2 | - |
| Others | 4 | 4 | 4 |
| Total | 100 | 100 | 100 |

The vehicle in Table 1 constitutes the liquid portion of printing ink, serving to disperse the pigment to fluidise the ink so that the ink may be transferred smoothly on a printing machine from an ink fountain to printing paper via rollers, a printing plate, and a blanket. The vehicle turns solid after printing, serving to fix the pigment on the printed surface. The vehicles are divided into a linseed oil type, an alkyl type, a quick-drying resin type, and a heat-set type.

It has recently been desired to reduce the drying time of offset ink to improve printing speed. To this effect, a quick-drying ink containing, as the vehicle, a drying oil compounded with a resin and a mineral oil (high-boiling petroleum series solvent) has been used.

However, when a polyolefin film or synthetic paper comprising a stretched polyolefin film containing an inorganic fine powder (see JP-B-46-40794 corresponding to U.S. Patent 4,318,950 (the term "JP-B" as used herein means an "examined published Japanese patent application"), JP-A-61-279543 (the term "JP-A" as used herein means an "unexamined published Japanese patent application), and JP-A-61-3748) is printed using the above-described quick-drying offset ink, the polyolefin becomes swollen with the vehicle contained in the quick-drying offset ink (particularly a high-boiling petroleum series solvent, such as mineral oil), and the printed film or synthetic paper suffers from so-called solvent attack, i.e., partial development of unevenness of the surface or curling of the whole film in case of solid printing. Hence, practical application of such quick-drying offset inks has involved difficulties.

Therefore, in actual offset printing on polyolefin films, a special offset ink designed for polyolefin films which contains no mineral oil (i.e., an offset ink for non-absorbing materials) is employed at the expense of its quick drying properties.

However, since such a special offset ink for polyolefin films requires a long drying time, and printing businesses and ink manufacturers capable of dealing with the special offset inks are limited, it has been desired to develop polyolefin films or synthetic paper on which general-purpose offset inks of the oxidative polymerization type (drying oil type) can be applied.

Since it is common for general printers to carry out offset printing of pulp paper, such as fine paper and coated paper, using commercially available quick-drying inks, they must substitute the quick-drying ink with the special offset ink for non-absorbing materials each time a polyolefin film or synthetic paper is to be printed.

Considering the increased time and labor involved in the ink substitution, general printers are unwilling to undertake printing of polyolefin-based films such as synthetic paper. This has been one of the reasons preventing a broader application of polyolefin films or synthetic paper in offset printing.

EP-A-0 515 969 discloses a printable, biaxially oriented polypropylene laminate comprising a base layer containing CaCO₃, a pair of intermediate layers, and a pair of heat-sealable top layers, at least one of which has a thickness of 0.4 µm or less.

### SUMMARY OF THE INVENTION

As a result of various investigations for solving the foregoing problems, it has been found herein that a thermoplastic resin film having excellent printability can be obtained by incorporating a suitable amount of a specific resin into the thermoplastic resin film. The objects of the present invention have been satisfied based on this finding.

The present invention provides a stretched thermoplastic resin film laminate comprising a biaxially stretched thermoplastic resin film base layer (C), a pair of laminae (B₁, B₂) provided on each side of the base layer, and a pair of front and back surface layers (A₁, A₂) provided on each of the laminae, wherein the laminae each comprises a uniaxially stretched thermoplastic resin film containing 3 to 30% by weight of a petroleum resin and has a thickness of 2 to 25 µm, and the front and back surface layers each comprises a uniaxially stretched thermoplastic resin film containing no petroleum resin and has a thickness of 0.5 to 10 µm.

### BRIEF DESCRIPTION OF THE DRAWING

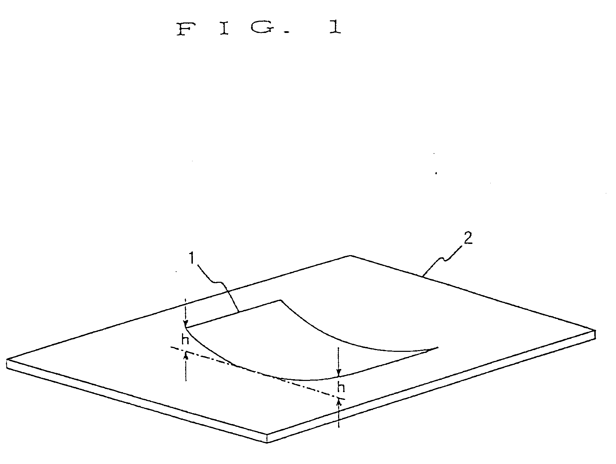

Fig. 1 is a perspective view showing the method of measuring the height of curl of the printed film in the Examples.

### Explanation of Reference Characters:

- 1: Printed film
- 2: Flat plate
- h: Curl height (cm)

### DETAILED DESCRIPTION OF THE INVENTION

### I. Stretched Thermoplastic Resin Film Laminate

The stretched thermoplastic resin film laminate having excellent printability according to the present invention has a structure comprising a biaxially stretched thermoplastic resin film base layer (C), a pair of laminae (B₁, B₂) provided on each side of the base layer, and a pair of front and back surface layers (A₁, A₂) provided on each of the laminae, wherein the laminae each comprises a uniaxially stretched thermoplastic resin film containing 3 to 30% by weight of a petroleum resin and has a thickness of 2 to 25 µm, and the front surface and back surface layers each comprises a uniaxially stretched thermoplastic resin film containing no petroleum resin and has a thickness of 0.5 to 10 µm.

The present invention also provides printing paper comprising the above-mentioned stretched thermoplastic resin film laminate and a pigment coating layer provided on at least the surface of said laminate to be printed for further improving offset printability.

### II. Thermoplastic Resin Film

### (1) Constituting Material

### (a) Thermoplastic Resin

Polyolefin resins are preferably used as the thermoplastic resin constituting the thermoplastic resin film.

Examples of suitable polyolefin resins include branched polyethylene, linear polyethylene, polypropylene, an ethylene-propylene random copolymer, an ethylene-propylene block copolymer, a propylene-butene-1 random copolymer, a propylene-poly(4-methylpentene-1) copolymer, and polystyrene.

### (b) Petroleum Resin

The petroleum resin which can be incorporated into the above-described thermoplastic resin film is a hydrocarbon resin (a polymer or a hydrogenation product thereof) obtained by polymerizing a petroleum raw material resulting from catalytic thermal cracking of petroleum. The petroleum resin is preferably composed of a mixture of resin-forming monomers, such as terpene, dicyclopentadiene, styrene, methylstyrene, vinyltoluene, indene, methylindene, butadiene, isoprene, piperylene, and pentylene. The polymer may be a homopolymer of one of these monomers or a mixture of such homopolymers or a copolymer of some of these monomers.

In more detail, petroleum resins can be generally classified by raw material into the following groups according to JET, Vol. 37, No. 2, pp. 75-79 (1989):
(1) Aliphatic petroleum resins (C₅ petroleum resins)
(2) Aromatic petroleum resins (C₉ petroleum resins)
(3) Aliphatic/aromatic or aliphatic/alicyclic copolymer petroleum resins (C₅/C₉ petroleum resins)
(4) Dicyclopentadiene series petroleum resins (DCPD petroleum resins)
(5) Hydrogenated petroleum resins derived from the resins (1) to (4) by hydrogenation.

Petroleum resins which can preferably be used in the present invention are hydrocarbon resins and include hydrocarbon polymers preferably having a melting point of 60 to 150°C, more preferably 70 to 130°C. The petroleum resins are derived from coke oven gas, coal tar fraction, or obtained by decomposing and thermally cracking petroleum raw materials, essentially pure hydrocarbon raw materials, hydrocarbon raw materials derived from turpentine oil, or turpentine oil. Typical hydrocarbon resins include coumarone-indene resins, C₅ petroleum resins, styrene copolymers, dicyclopentadiene resins, and terpene resins.

These resins are described in Kirk-Othmer, Encyclopedia of Chemical Technology, Vol. 3, No. 11, pp. 242-255 (1966).

Coumarone-indene resins are hydrocarbon resins obtained by polymerization of resin-forming substances present in a coal tar distillate recovered from a coke oven, phenol-modified coumarone-indene resins, and derivatives thereof.

C₅ petroleum resins are obtained by polymerizing the C₅ cut of cracked petroleum or pentadiene recovered after extraction of an isoprene monomer from the C₅ cut as a main raw material usually using an aluminum halide catalyst.

Styrene copolymers include low-molecular-weight styrene homopolymer resins and copolymer resins of styrene and, e.g., α-methylstyrene, vinyltoluene, butadiene or indene, specifically alkylstyrene-indene copolymers.

Dicyclopentadiene resins include homopolymer resins or copolymer resins of dicyclopentadiene derived from a coal tar fraction or separated petroleum gas. The dicyclopentadiene resins are prepared by maintaining the dicyclopentadiene-containing raw material at a high temperature for a considerably long time, resulting in the formation of dimer, trimer and/or high polymer depending on the temperature.

Terpene resins include polymers of terpenes, i.e., hydrocarbons represented by the empirical formula C₁₀H₁₆ present in most essential oils and oleoresins, and phenol-modified terpene resins, for example α-pinene, β-pinene, dipentene, limonene, myrcene, bornylene, camphene, and the like.

Particularly preferred petroleum resins are hydrogenated petroleum resins (5) having a (ring and ball) softening point of 70 to 150°C and hydrogenated terpene resins (2).

Hydrogenated petroleum resins include "ARKON", produced by Arakawa Kagaku Kogyo K.K.; "CLEARON", produced by Yasuhara Chemical K.K.; "ESCOREZ", produced by Tonex Co., Ltd.; "FTR", produced by Mitsui Petrochemical Industries, Ltd.; and "MARUKAREZ", produced by Maruzen Sekiyu Kagaku K.K.

These petroleum resins are generally incorporated by melt-kneading with the thermoplastic resin.

The thermoplastic resin film containing the petroleum resin (laminae) may contain 5 to 55% by weight of an inorganic fine powder.

At least the above-described base layer (C) and front and back surface layers (A₁, A₂) may contain an inorganic fine powder, the inorganic fine powder content in the front and back surface layers being higher than that in the base layer.

### (c) Inorganic Fine Powder

It is preferred that the thermoplastic resin forming the front and back surface layers (A₁, A₂), laminae (B₁, B₂), and base layer (C) contains an inorganic fine powder to form a number of microvoids therein.

Examples of suitable inorganic fine powder includes calcium carbonate, calcined clay, diatomaceous earth, talc, titanium oxide, barium sulfate, aluminum sulfate, and silica. The inorganic fine powder preferably has an average particle size of not greater than 10 µm, more preferably not greater than 4 µm.

### (2) Formation of Stretched Thermoplastic Resin Film Laminate

The stretched thermoplastic resin film laminate according to the present invention is obtained as follows. Firstly, a uniaxially stretched thermoplastic resin base layer (C) is prepared. Separately, (a) a resin composition for laminae (B₁, B₂) comprising 3 to 30% by weight of a petroleum resin and 70 to 97% by weight of a thermoplastic resin and (b) a thermoplastic resin for front and back surface layers (A₁, A₂), which does not contain a petroleum resin, each in its respective extruder, is fed to a co-extrusion die, melt-laminated in the die to form layer structures (A₁/B₁) and (A₂/B₂), and extrusion laminated on the front and back side of the uniaxially stretched film (C), respectively, to provide a layer structure (A₁)/(B₁)/(C)/(B₂)/(A₂) from the front side. The resulting laminate is then stretched in the direction perpendicular to the stretching direction of the uniaxially stretched film (C).

Where a pigment coating layer is applied to the stretched thermoplastic resin film laminate to further improve offset printability, taking coating properties in forming a pigment coating layer into consideration, an opaque stretched film having microvoids in the inside thereof and fine cracks on the surface thereof, so-called synthetic paper, is suitable as a surface on which a pigment coating layer can be intimately adhered.

Such synthetic paper can be prepared as follows. A thermoplastic resin film containing preferably 5 to 45% by weight, more preferably 10 to 40% by weight, of an inorganic fine powder and preferably 55 to 95% by weight, more preferably 60 to 90% by weight, of a thermoplastic resin is uniaxially stretched at a stretch ratio of preferably 3 to 10, more preferably 4 to 7, to prepare a uniaxially stretched film (C). Resin compositions (B₁, B₂) comprising 3 to 30% by weight, preferably 5 to 25% by weight, of a petroleum resin, preferably 5 to 55% by weight, more preferably 10 to 50% by weight, of an inorganic fine powder, and preferably 30 to 92% by weight, more preferably 50 to 85% by weight, of a thermoplastic resin and resin compositions (A₁, A₂) comprising preferably 8 to 65% by weight, more preferably 25 to 55% by weight, of an inorganic fine powder and preferably 35 to 92% by weight, more preferably 45 to 75% by weight, of a thermoplastic resin are melt-kneaded in four extruders. Resin compositions (A₁) and (B₁) and resin compositions (A₂) and (B₂) are fed to two co-extrusion dies and melt-laminated in the respective die. The two molten laminates are extruded to laminate on each side of the uniaxially stretched film (C) with (A₁) and (A₂) as a front surface and a back surface, respectively, to provide a layer order of (A₁, front surface)/(B₁)/(C)/(B₂)(A₂, back surface). The laminated film is then uniaxially stretched in the direction perpendicular to the stretching direction of the uniaxially stretched thermoplastic resin film (C) at a stretch ratio of preferably from 3 to 15, more preferably from 4 to 12, by means of a tenter.

The synthetic paper is a stretched film of a microvoid-containing film laminate having a layer structure of A₁/B₁/C/B₂/A₂ (uniaxially stretched film front surface layer/uniaxially stretched film/biaxially stretched film base layer/uniaxially stretched film/uniaxially stretched film back surface layer).

If the amount of the petroleum resin in layers (B₁, B₂) is less than 3% by weight, no effect of preventing curling is produced. The presence of from 3% to 30% by weight of the petroleum resin is sufficient to prevent curling. If the amount of the petroleum resin exceeds 30% by weight, melt-kneading in an extruder is difficult.

Since offset printed paper is usually stored in stacks, it is necessary to provide the petroleum resin-containing lamina (B) on not only the side to be printed but the back side in order to prevent penetration of the solvent of the printing ink of the underlying printed film during storage.

A thermoplastic resin film containing no petroleum resin is further provided on each lamina (B) as front and back surface layers (A₁, A₂) to prevent the resulting stretched film laminate from blocking with a cooling roll which would cause surface roughening. Thus, a stretched thermoplastic resin film laminate with excellent appearance free from surface roughening can be obtained.

The petroleum resin present in the uniaxially stretched film laminae (B₁, B₂) gradually migrates over time to the front and back surface layers (A₁, A₂) to prevent curling. Therefore, there is no need to incorporate a petroleum resin to the biaxially stretched film base layer (C). Accordingly, the biaxially stretched film base layer (C) is prevented from sticking to a cooling roll after it is extruded into sheeting.

In the thermoplastic resin film laminate, the petroleum resin-containing uniaxially stretched layers (B₁, B₂) should have a thickness of not less than 2 µm, preferably 5 to 10 µm. The uniaxially stretched film front and back surface layers (A₁, A₂) which do not contain a petroleum resin should have a thickness of not larger than 10 µm, preferably 0.5 to 5 µm. If the uniaxially stretched layers (B₁, B₂) are thinner than 2 µm, or if the front and back surface layers (A₁, A₂) are thicker than 10 µm, it takes a long time for the petroleum resin to migrate (bleed out) from each layer (B) to each layer (A). Consequently, the resulting thermoplastic resin film laminate, when offset printed with general-purpose offset inks of oxidative polymerization type (drying oil type), tends to develop unevenness on its surface or curling as a whole, thereby enjoying little of the advantages of the present invention.

The biaxially stretched film base layer (C) generally has a thickness of 30 to 150 µm, preferably 45 to 100 µm. The stretched thermoplastic resin film laminate generally has a thickness of 50 to 200 µm.

The curling preventive effect brought about by incorporation of a petroleum resin seems attributable partly to improvement in rigidity of the stretched film laminate due to the alicyclic and/or aromatic molecular structure of petroleum resins, and partly to the good compatibility between the petroleum resin and the high-boiling petroleum series solvent present in offset inks, by which the petroleum resin easily bleeds out on the printed surface of the film laminate and also easily penetrates into the microvoids of the film laminate thereby preventing swelling of the film laminate.

What is important is the balance between swelling of the front and back surface layers (A₁, A₂) and the uniaxially stretched film layers (B₁, B₂). If the petroleum-containing layers (B₁, B₂) have too small a thickness or too low a petroleum content or if the front and back surface layers (A₁, A₂) are too thick, swelling of the stretched film laminate can result, leading to occurrence of so-called solvent attack.

### III. Pigment Coating Layer

A pigment coating layer can be provided on at least the printing side of the stretched thermoplastic resin film laminate of the present invention in order to further improve suitability to offset printing.

The pigment coating layer can be formed in accordance with general coating techniques employed in the preparation of coated paper. The pigment coating layer contains 30 to 80% by weight of a pigment and 70 to 20% by weight of binder.

### (1) Pigment Coating Composition

The pigment coating composition to be used for pigment coating includes latices containing a pigment employed for general coated paper, such as clay, talc, calcium carbonate, magnesium carbonate, aluminum hydroxide, silica, aluminum silicate, calcium silicate, a plastic pigment, or silica, and an adhesive (binder).

The binder used herein includes latices of SBR (styrene-butadiene rubber) or MBR (methacryl-butadiene rubber), acrylic emulsions, starch, PVA (polyvinyl alcohol), CMC (carboxymethyl cellulose), and methyl cellulose.

The pigment coating composition may further contain a dispersant, such as specific sodium polycarboxylates, e.g., an acrylic acid-sodium acrylate copolymer, and a crosslinking agent, such as polyamide-urea resin.

The pigment coating composition is preferably used as an aqueous coating composition having a solids content of 15 to 70% by weight, more preferably 35 to 65% by weight.

### (2) Coating Method and Means

The coating composition can be applied to the stretched thermoplastic resin film laminate by such coating methods as gravure coating, rod coating, roll coating, blade coating, and size press coating.

### (3) Spread

The pigment coating composition is applied at a spread preferably of 0.1 to 20 g/m², more preferably 1 to 15 g/m². Accordingly, the pigment coating layer has a thickness preferably of 0.08 to 20 µm, more preferably 0.8 to 15 µm.

### IV. Offset Printing

The resulting thermoplastic resin film of the present invention having excellent printability is offset printed by adhering an offset ink on its surface by means of an offset printing press.

### (1) Offset Ink

The offset ink, in general, basically comprises main components comprising a pigment and a vehicle and auxiliaries comprising a viscosity modifier, a drying controlling agent, and other additives as shown in Tables 1 and 2 above.

### (a) Pigment

The pigments include azo pigments, such as lithol red and benzidine yellow; lake pigments, such as permanent green, permanent rhodamine, permanent blue, and Lake Red C; organic pigments, such as Brilliant Carmine 6B and Phthalocyanine Blue; and inorganic pigments, such as alumina, barium sulfate, red iron oxide, chrome yellow, Prussian blue, titanium white, and carbon black.

### (b) Vehicle

Vehicles include synthetic resins, vegetable oils (drying oils), and solvents.

Specific examples of these vehicles are:
1) linseed oil type vehicles, such as linseed oil and stand oil, and alkyd type vehicles, such as drying oil-modified alkyd resins,
2) quick-drying resin type vehicles mainly comprising a resin varnish, which is prepared by dissolving a rosin-modified phenolic resin in a mixture of linseed oil and tung oil or a low-viscosity linseed oil varnish and controlling the viscosity by addition of a petroleum fraction having a narrow boiling point range, and
3) heat-set type vehicles, such as varnish prepared by dissolving a resin in a petroleum fraction having a narrow boiling point range.

### (c) Viscosity Modifier

The viscosity modifier includes solvents, diluted varnishes, and polymer compounds.

### (d) Drying Controlling Agent

The drying controlling agent includes driers and drying inhibitors.

### (e) Other Additives

Other additives include waxes, membrane-reinforcing agents, and back stain inhibitors.

### (2) Offset Printing Method

Offset printing of the stretched thermoplastic resin film laminate of the present invention with the above-mentioned offset ink can be carried out in the same manner as general offset printing by the use of commercially available offset printing machines.

When general-purpose offset inks of oxidative polymerization type (drying oil type) is adhered to the surface of the thermoplastic resin film of the present invention by offset printing, the printed stretched film laminate or synthetic paper rarely develops unevenness on its surface or curling as a whole.

The present invention will now be illustrated in greater detail with reference to the accompanying Examples and Comparative Examples, but it should be understood that the present invention is not to be construed as being limited thereto. All the parts and percents are by weight unless otherwise indicated.

Evaluation in Examples and Comparative Examples was made according to the following methods.

### Methods of Evaluation

### (1) Height of Curl

A film to be evaluated was printed solid on an offset printing press using a commercially available drying type offset ink NEW BEST ONE PROCESS BLACK M, manufactured by Toka Shikiso K.K., at an ink transfer amount of 1 g/m².

The printed film was cut to a size of 12 cm × 5 cm, and the cut piece was placed on a flat plate for 24 hours. The height (h) of the curl was measured as shown in Fig. 1.

### (2) Development of Unevenness

A film to be evaluated was printed on an offset printing press using a commercially available drying type offset ink NEW BEST ONE PROCESS BLACK M, produced by Toka Shikiso K.K., to give a checkered pattern (1 cm × 1 cm) at an ink transfer amount of 1 g/m².

The film unevenness formed by the printed part and the non-printed part was judged visually.

The judgement was made according to the following standard of evaluation.
- No unevenness: A
- Marked unevenness: C
- Medium unevenness: B

### EXAMPLE 1

### Preparation of Base Layer

(1) A composition of 85% of polypropylene (expressed as PP in Table 3) having a melt flow rate (MFR; 230°C; 2.16 kg weight) of 0.8 g/10 min and a melting end temperature of 178°C in the DSC peak and 15% of ground calcium carbonate having an average particle size of 1.5 µm (expressed as CaCO₃ in Table 3) was melt-kneaded in an extruder set at 270°C, extruded into sheeting through a die, and cooled by a cooling apparatus to prepare an unstretched sheet.
   The unstretched sheet was heated to 150°C and stretched in the machine direction at a stretch ratio of 5 to obtain a uniaxially stretched film (C).
(2) A composition of 40% of polypropylene (represented as PP in Table 3) having an MFR of 4.0 g/10 min and a melting end temperature of 174°C in the DSC peak, 45% of ground calcium carbonate having an average particle size of 1.5 µm (represented as CaCO₃ in Table 3), and 15% of a petroleum resin (trade name "ARKON P-90", produced by Arakawa Kagaku K.K.; softening point: 90°C) was melt-kneaded in two separate extruders set at 220°C (resins (B₁, B₂)).
(3) A resin composition of 55% of polypropylene having an MFR of 3.5 g/10 min and a melting end temperature of 174°C in the DSC peak (expressed as PP in Table 3) and 45% of ground calcium carbonate having an average particle size of 1.5 µm (represented as CaCO₃ in Table 3) was melt-kneaded in two separate extruders set at 220°C (resins (A₁, A₂)).
(4) Resins (B₁) and (A₁) and resins (B₂) and (A₂) melt-kneaded in the respective extruders were fed to two separate dies, melt-laminated in the respective die, and extrusion laminated on both sides of the uniaxially stretched film (C) with (A₁, A₂) as surface layers to obtain a laminate (A₁/B₁/C/B₂/A₂).

After being cooled to 60°C, the resulting laminated sheet was again heated to 162°C, stretched in the transverse direction at a stretch ratio of 7.5 by means of a tenter, subjected to annealing at 167°C, and cooled to 60°C. The edges were trimmed to obtain a 5-layered thermoplastic resin stretched film (A₁/B₁/C/B₂/A₂ thickness: 3 µm/15 µm/74 µm/15 µm/3 µm).

### Formation of Pigment Coating Layer

An aqueous coating composition having the following formulation (the proportions are given on a solid basis) was prepared and applied to one side of the above-obtained stretched film laminate to a solid spread of 10 g/m² and dried at 105°C for 1 minute to obtain a coated film.

### Formulation for Pigment Coating Composition:

| | | |
|---|---|---|
| (D) | Precipitated calcium carbonate (Brilliant-15, produced by Shiraishi Kogyo K.K.) | 50% |
| (E) | Kaolin clay (Ultrawhite-90, produced by Engelhard Corporation) | 10% |
| (F) | Alkyl acrylate-styrene copolymer resin emulsion (Mowinyl 8010, produced by Hoechst Gosei K.K.) | 35% |
| (G) | Modified polyvinyl alcohol (Gohsefimer Z-100, produced by Nippon Gosei Kagaku K.K.) | 5% |

In preparing the above coating composition, 0.5 part of sodium polycarboxylate (Poise 520, produced by Kao Corp.) was added as a dispersant to 100 parts of each of inorganic fine powders (D) and (E), and 10 parts of a polyamide-urea resin (Sumirez Resin 633, produced by Sumitomo Chemical Co., Ltd.) was added as a crosslinking agent to 100 parts of polyvinyl alcohol (G).

### EXAMPLE 2

The same procedure as in Example 1 was repeated, except for replacing ARKON P-90 (softening point: 90°C) with a petroleum resin ARKON P-125 (softening point: 125°C), produced by Arakawa Kagaku K.K. The results obtained are shown in Table 3.

### EXAMPLE 3

The same procedure as in Example 1 was repeated, except for replacing ARKON P-90 (softening point: 90°C) with a petroleum resin ARKON P-140 (softening point: 140°C), produced by Arakawa Kagaku K.K. The results obtained are shown in Table 3.

### EXAMPLE 4

The same procedure as in Example 1 was repeated, except for replacing ARKON P-90 (softening point: 90°C) with a petroleum resin CLEARON P-125 (softening point: 125°C), produced by Yasuhara Chemical K.K. The results obtained are shown in Table 3.

### EXAMPLE 5

The same procedure as in Example 1 was repeated, except for replacing ARKON P-90 (softening point: 90°C) with a petroleum resin ESCOREZ E5320 (softening point: 125°C) produced by Tonex Co., Ltd. The results obtained are shown in Table 3.

### EXAMPLE 6

The same procedure as in Example 3 was repeated, except for changing the amounts of the polypropylene and the petroleum resin ARKON P-140 (softening point: 140°C) in layers (B₁, B₂) to 50% and 5%, respectively. The results obtained are shown in Table 3.

### EXAMPLE 7

The same procedure as in Example 3 was repeated, except for changing the amounts of the polypropylene and the petroleum resin ARKON P-140 (softening point: 140°C) in layers (B₁, B₂) to 45% and 10%, respectively. The results obtained are shown in Table 3.

### EXAMPLE 8

The same procedure as in Example 3 was repeated, except for changing the thickness of layers (A₁, A₂) to 10 µm. The results obtained are shown in Table 3.

### EXAMPLE 9

The same procedure as in Example 7 was repeated, except for changing the thicknesses of layers (B₁, B₂) and layer (C) to 10 µm and 84 µm, respectively. The results obtained are shown in Table 3.

### EXAMPLE 10

The same procedure as in Example 7 was repeated, except for changing the amounts of the polypropylene and the inorganic fine powder in layers (B₁, B₂) to 65% and 25%, respectively. The results obtained are shown in Table 3.

### COMPARATIVE EXAMPLE 1

The same procedure as in Example 1 was repeated, except for changing the amounts of the polypropylene and the inorganic fine powder in layers (B₁, B₂) to 55% and 45%, respectively, and omitting the petroleum resin. The results obtained are shown in Table 3.

### COMPARATIVE EXAMPLE 2

The same procedure as in Example 3 was repeated, except for changing the amounts of the polypropylene and the petroleum resin ARKON P-140 (softening point: 140°C) in layers (B₁, B₂) to 54% and 1%, respectively. The results obtained are shown in Table 3.

### COMPARATIVE EXAMPLE 3

The same procedure as in Example 3 was repeated, except for changing the thicknesses of layers (B₁, B₂) and base layer (C) to 1 µm and 102 µm, respectively. The results obtained are shown in Table 3.

### COMPARATIVE EXAMPLE 4

The same procedure as in Example 3 was repeated, except for changing the thickness of layers (A₁, A₂) and base layer (C) to 20 µm and 40 µm, respectively. The results obtained are shown in Table 3.

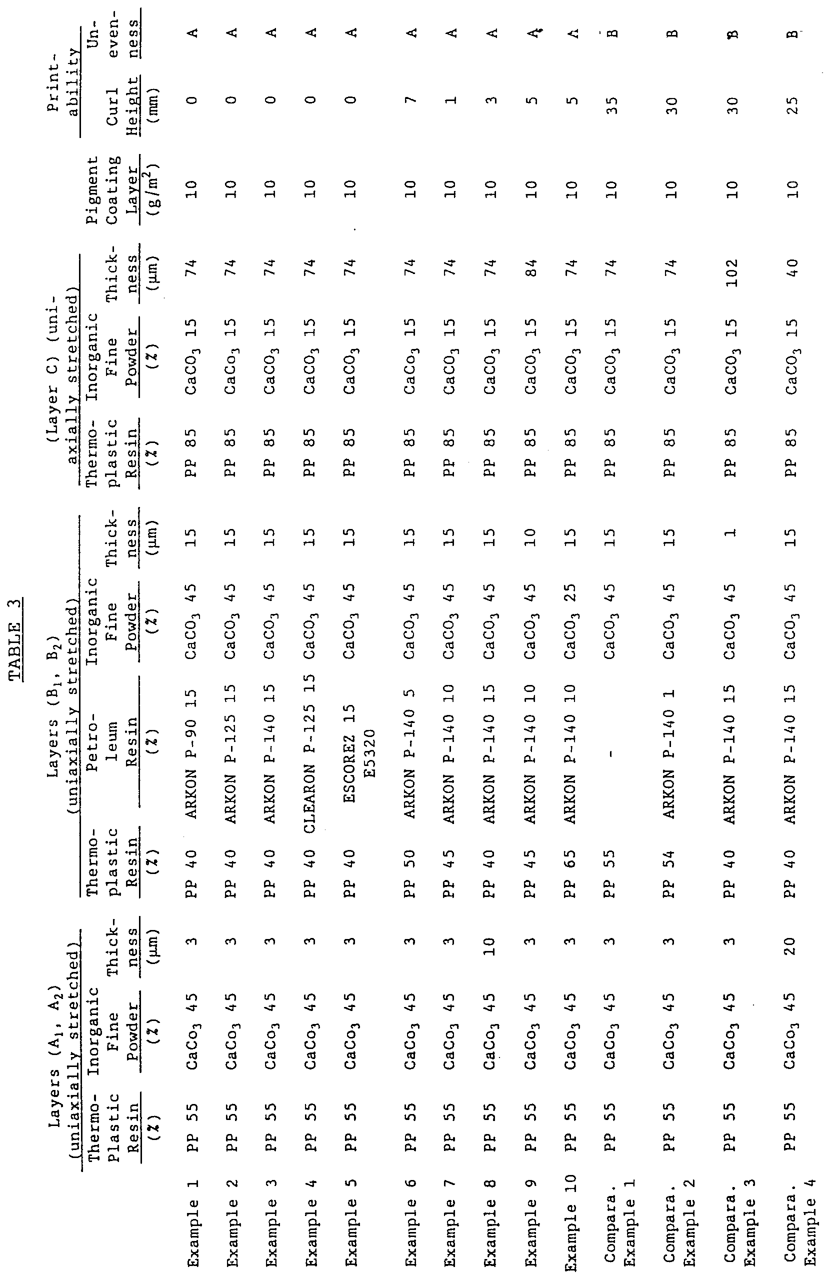

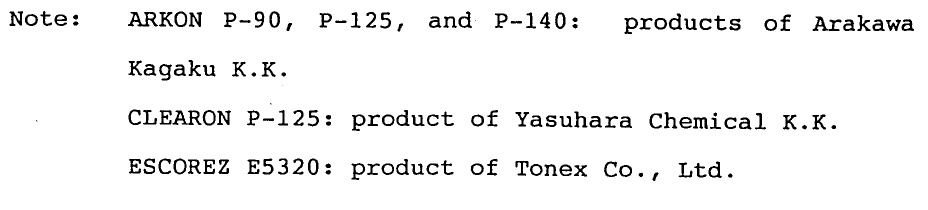

Because the stretched thermoplastic resin film laminate according to the present invention contains a petroleum resin, the film laminate or pigment-coated synthetic paper thereof rarely develops unevenness on the surface or curling as a whole when printed with general-purpose offset inks of the oxidative polymerization type (drying oil type).

While the invention has been described in detail and with reference to specific embodiments thereof, it will be apparent to one skilled in the art that various changes and modifications can be made therein without departing from the scope thereof.

## Claims

1. A stretched thermoplastic resin film laminate comprising a biaxially stretched thermoplastic resin film base layer (C), a pair of laminae (B₁, B₂) provided on each side of said base layer, and a pair of front and back surface layers (A₁, A₂) provided on each of said laminae, wherein said laminae each comprises a uniaxially stretched thermoplastic resin film containing 3 to 30% by weight of a petroleum resin and has a thickness of 2 to 25 µm, and said front surface and back surface layers each comprises a uniaxially stretched thermoplastic resin film containing no petroleum resin and has a thickness of 0.5 to 10 µm, said stretched thermoplastic resin film laminate having provided on one or both sides thereof a pigment coating layer.

2. Printing paper comprising the stretched thermoplastic resin film laminate according to claim 1

3. The printing paper according to claim 2, wherein at least said base layer (C) and said front and back surface layers (A₁, A₂) contain an inorganic fine powder, the inorganic fine powder content in said front and back surface layers being higher than that in said base layer.

4. The printing paper according to claim 2, wherein said pigment coating layer has a thickness of 0.8 to 15 µm.

5. The stretched thermoplastic resin film laminate according to claim 1, therein said petroleum resin has a softening point of 70 to 130°C.

6. The printing paper according to claim 3, wherein the inorganic fine powder content in the base layer (C) is within the range of from 5 to 45 wt% and the inorganic fine powder contents in the front and back surface layers (A₁, A₂) each is within the range of from 8 to 65 wt%.

## Patentansprüche

1. Ein gestrecktes thermoplastisches Harzfilmlaminat, welches eine zweiachsig gestreckte thermoplastische Basisfilmschicht (C), ein Paar Lamellen (B₁, B₂), welche auf jeder Seite der genannten Basisschicht bereitgestellt sind, und ein Paar Oberflächenschichten (A₁, A₂) für die Vorder- und die Rückseite enthält, welche auf jeder der genannten Lamellen bereitgestellt sind, wobei die genannten Lamellen jeweils einen einachsig gestreckten thermoplastischen Harzfilm beinhalten, welcher 3 bis 30 Gewichtsprozent eines Erdölharzes enthält und eine Dicke von 2 bis 25 µm hat und die genannten Oberflächenschichten für die Vorder- und die Rückseite jeweils einen einachsig gestreckten thermoplastischen Harzfilm beinhalten, welcher kein Erdölharz enthält und eine Dicke von 0,5 bis 10 µm hat, und wobei auf einer oder beiden Seiten des genannten gestreckten thermoplastischen Harzfilmlaminats eine Pigmentaufstrichschicht bereitgestellt ist.

2. Druckpapier, welches das gestreckte thermoplastische Harzfilmlaminat gemäß Anspruch 1 beinhaltet.

3. Das Druckpapier gemäß Anspruch 2, worin mindestens die genannte Basisschicht (C) und die genannten Oberflächenschichten (A₁, A₂) für die Vorder- und die Rückseite ein feines anorganisches Pulver enthalten, wobei der Gehalt an dem feinen anorganischen Pulver in den Oberflächenschichten für die Vorder- und die Rückseite höher ist als in der genannten Basisschicht.

4. Das Druckpapier gemäß Anspruch 2, worin die genannte Pigmentaufstrichschicht eine Dicke von 0,8 bis 15 µm hat.

5. Das gestreckte thermoplastische Harzfilmlaminat gemäß Anspruch 1, worin das genannte Erdölharz einen Erweichungspunkt zwischen 70 und 130 °C hat.

6. Das Druckpapier gemäß Anspruch 3, worin der Gehalt an dem feinen anorganischen Pulver in der Basisschicht (C) innerhalb des Bereichs zwischen 5 und 45 Gewichtsprozent und die Gehalte an dem feinen anorganischen Pulver in den Oberflächenschichten (A₁, A₂) für die Vorder- und die Rückseite jeweils innerhalb des Bereiches zwischen 8 und 65 Gewichtsprozent liegen.

## Revendications

1. Stratifié de films de résines thermoplastiques étirés comprenant une couche support (C) constituée d'un film de résine thermoplastique étiré biaxialement, une paire de feuilles intermédiaires (B₁, B₂) disposées sur chaque côté de ladite couche support, et une paire de couches superficielles endroit et envers (A₁, A₂) disposées sur chacune desdites feuilles intermédiaires, et dans lequel lesdites feuilles intermédiaires comprennent chacune un film de résine thermoplastique étiré uniaxialement contenant 3 à 30 % en masse d'une résine de pétrole, et ont une épaisseur de 2 à 25 µm, et lesdites couches superficielles endroit et envers comprennent chacune un film de résine thermoplastique étiré uniaxialement ne contenant pas de résine de pétrole, et ont une épaisseur de 0,5 à 10 µm, ledit stratifié de films de résines thermoplastiques étirés étant muni sur un côté ou sur les deux d'une couche de revêtement pigmenté.

2. Papier d'impression comprenant le stratifié de films de résines thermoplastiques étirés selon la revendication 1.

3. Papier d'impression selon la revendication 2, dans lequel au moins ladite couche support (C) et lesdites couches superficielles endroit et envers (A₁, A₂) contiennent une poudre fine inorganique, la teneur en poudre fine inorganique desdites couches superficielles endroit et envers étant supérieure à celle de ladite couche support.

4. Papier d'impression selon la revendication 2, dans lequel ladite couche de revêtement pigmenté a une épaisseur de 0,8 à 15 µm.

5. Stratifié de films de résines thermoplastiques étirés selon la revendication 1, dans lequel ladite résine de pétrole a un point de ramollissement de 70 à 130°C.

6. Papier d'impression selon la revendication 3, dans lequel la teneur en poudre fine inorganique de la couche support (C) est comprise entre 5 et 45 % en masse et les teneurs en poudre fine inorganique des couches superficielles endroit et envers (A₁, A₂) sont comprises chacune entre 8 et 65 % en masse.
